# EUROPÄISCHE PATENTSCHRIFT

(11) **EP 2 196 716 B1**
(45) Veröffentlichungstag und Bekanntmachung des Hinweises auf die Patenterteilung: **19.01.2011**
(21) Anmeldenummer: 09015274.5
(22) Anmeldetag: 10.12.2009
(51) Int. Cl.: F16L 33/207

(54) **Schlauchkupplung**
Hose coupling
Couplage de tuyau

(30) Priorität: 11.12.2008 DE 102008061899; 11.12.2008 DE 202008016440 U
(43) Veröffentlichungstag der Anmeldung: 16.06.2010
(73) Patentinhaber: Voswinkel KG, 58540 Meinerzhagen (DE)
(72) Erfinder: Schmitt, Frank, 58540 Meinerzhagen (DE)
(74) Vertreter: Patentanwälte Buse, Mentzel, Ludewig

(56) Entgegenhaltungen:
- EP-A1- 0 573 908
- AU-B2- 510 400
- GB-A- 992 378

## Beschreibung

Die Erfindung betrifft eine Schlauchkupplung, insbesondere zur Anwendung bei Hydraulikschlauchleitungen, die hohe und höchste Drücke aufnehmen müssen.

Schlauchkupplungen für Hochdruckhydraulikleitungen beispielsweise bei Fertigungsmaschinen oder in der Bewegungshydraulik sind bekannt. Bei diesen Hydraulikantrieben wird das Hydraulikmedium vorzugsweise mittels flexibler Schläuche übertragen. Eine universell anwendbare Schlauchkupplung für verschiedene Schlaucharten ist aus EP 1 744 09 A1 oder der den Oberbegriff des Anspruchs 1 bildenden AU 510 400 B bekannt. Die aus der EP 1744090 A bekannte UVOS-Schlauchkupplung umfasst ein Kupplungselement mit einem Schlauchnippel, auf den das Ende eines Hydraulikschlauches aufgeschoben und mittels einer den Schlauch umgreifenden Pressfassung an das Kupplungselement angepresst wird. Diese bekannte Schlauchkupplung besitzt eine Pressfassung, die radial zum Schlauch verlaufende und zum Schlauch gerichtete als Vorsprünge ausgebildete Verformungen besitzt, die im Befestigungsfall in den Schlauch eingreifen. Im Bereich dieser Verformungen sind auf der Außenseite der Pressfassungen Vertiefungen vorgesehen. Diese Vertiefungen ermöglichen es, beim Verpressen der UVOS-Schlauchkupplung Material aufzunehmen, so dass sich beim Verpressen die Pressfassung in axialer Richtung nicht ausdehnt. Durch das Verpressen wird eine dichte Verbindung zwischen dem Hydraulikschlauch und dem Kupplungselement erzielt. Diese Schlauchkupplungen lassen sich bei großen Nennweiten, d.h. bei großen Innendurchmessern der Hydraulikschläuche, bei Drücken bis zu 100 bar sicher einsetzen. Bei kleinen Nennweiten können diese bekannten Schlauchkupplungen bis zu Drücken von 500 bis 600 bar eingesetzt werden. Für den Bereich der Schwerhydraulik ist diese Schlauchkupplung jedoch nicht einsetzbar, da die Pressfassung für die dort auftretenden Zugbelastungen nicht ausgelegt ist.

Es ist bekannt, im Bereich der Schwerhydraulik Hydraulikrohrleitungen zu verwenden, für die es vielseitige Anschlussarmaturen gibt, die eine sichere und dichte Verbindung gewährleisten. Die hohen Drücke, insbesondere von einigen 100 bar werden zur Erzielung hoher Schließ- oder Presskräfte, beispielsweise bei Kunststoffspritzmaschinen, Pressen oder großen Baumaschinen, benötigt. Die Verwendung von Hydraulikrohren hat jedoch den Nachteil, dass diese nur starr verlegt werden können, was bei komplizierten Konstruktionen mehrfache Abbiegungen und die Verwendung von verschiedenen Armaturen zur Folge hat. Dies führt zu Druckverlusten, so dass beispielsweise zur Bewegung einer Baggerkralle nur 10% der Energie zur Verfügung steht, die ursprünglich vom Motor erzeugt wurde. Dieser niedrige Wirkungsgrad ist nicht zufriedenstellend.

Aufgabe der Erfindung ist es daher, eine Schlauchkupplung für die Schwerhydraulik zur Verfügung zu stellen, bei der ein maximaler Volumenfluss erzielbar ist, so dass sich die Energieeffizienz eines solchen Hydrauliksystems verbessert. Der Erfindung liegt des Weiteren die Aufgabe zugrunde, eine Schlauchkupplung zur Verfügung zu stellen, die sehr hohe Drücke und insbesondere auch impulsartige Druckspitzen zuverlässig aufnehmen kann.

Diese Aufgabe wird erfindungsgemäß durch eine Schlauchkupplung mit den Merkmalen des Anspruchs 1 gelöst. Diese Schlauchkupplung gewährleistet eine zugfeste und dichte Anbindung eines Hochdruckschlauchs an einem rohrartigen Kupplungselement. Der Anschlussbereich für den Hochdruckschlauch in der erfindungsgemäßen Schlauchkupplung umfasst zwei Bereiche, nämlich einen vorderen Sicherungsbereich und einen sich in Axialrichtung anschließenden Dichtbereich, wobei im Sicherungsbereich der Hochdruckschlauch kraft- und formschlüssig und damit zugfest zwischen dem Schlauchnippel des Kupplungselements und der den Hydraulikschlauch umgreifenden Pressfassung verpresst ist.

Der Hochdruckschlauch enthält in bekannter Weise eine Metalleinlage, die für Hochdruckanwendungen notwendig ist. Diese Metalleinlage kann aus einem Drahtgeflecht bestehen oder aus mindestens einer Lage spiralförmig gewickelter Drähte. Für Höchstdruckleitungen werden insbesondere Hochdruckschläuche mit mindestens drei Lagen solcher Drahtspiralenwicklungen eingesetzt. Zum Schutz der Metalleinlage besitzen die Hochdruckschläuche einen Innen- und Außenmantel aus Kunststoff, insbesondere elastomeren Kunststoffen, wie beispielsweise Gummi. Diese Kunststoffmäntel schützen die Metalleinlage vor Medieneinflüssen. Der glatte Innenmantel gewährleistet des Weiteren einen ungehinderten Durchfluss beim Transport des Hydraulikmediums. Wie aus dem Dokument EP 1 744 090 A1 bekannt, wird der Hochdruckschlauch auf einen Schlauchnippel eines Kupplungselements aufgeschoben und mittels einer aufgepressten Pressfassung am Kupplungselement gehalten. Die dichte Verbindung zwischen dem Kupplungselement und dem Hochdruckschlauch wird in gleicher Weise dadurch erreicht, dass die Pressfassung radial zum Hochdruckschlauch verlaufende und zum Hochdruckschlauch gerichtete als Vorsprünge ausgebildete Wandverformungen besitzt sowie an der Außenseite der Pressfassung im Bereich dieser Wandverformungen Vertiefungen vorgesehen sind, die beim radialen Verpressen Material der Pressfassung aufnehmen können, wodurch eine Längenänderung der Pressfassung beim Verpressen reduziert wird. Die Vertiefungen fungieren damit als Kompensationszonen. Das Verpressen führt bis zum Befestigungsfall zu keiner Längenänderung der Pressfassung, da das Material der Wandverformungen in die Vertiefung zurückweichen kann. Bei einer Überpressung wird durch die Presskraft eine Gegenkraft erzeugt, die dazu führt, dass das Material der Pressfassung in die Vertiefung aber auch am Ende der Pressfassung in Längsrichtung sowie durch Anpassung der Höhen der Wandverformung ausweicht. Ein Einfall des Schlauchnippels, d.h. eine Verringerung der lichten Weite des Schlauchnippels, erfolgt nicht, zumindest nicht bis zu einem gewissen Maß an Überpressung. Die von außen sichtbare axiale Verlängerung der Pressfassung kann bei der Schlauchkupplung als Maß für die ausreichende Verpressung und dichte Verbindung angesehen werden.

In Axialrichtung vor dem Dichtbereich ist bei dieser erfindungsgemäßen Schlauchkupplung ein Sicherungsbereich vorgesehen, die eine Ausreißsicherung des Schlauches bei Zugbelastung gewährleisten. Ausreißsicherungen sind von Interlok-Schlauchkupplungen bekannt. Bei diesen bekannten Ausreißsicherungen ist an der Innenseite der Pressfassung eine radial abstehende Wulst vorgesehen, die im Befestigungsfall die Metalleinlage eines Schlauches in eine Ringnut am Schlauchnippel einpresst. Eine solche kraft und formschlüssige Verbindung zwischen der metallischen Pressfassung, dem metallischen Schlauchnippel und der metallischen Einlage des Schlauches, welcher in diesem Bereich von seinem Innen- und Außenmantel befreit ist, führt zu einer sicheren und zugfesten Verbindung des Schlauches an der entsprechenden Armatur. Eine solche Ausreißsicherung lässt sich jedoch nicht auf die bekannte Schlauchkupplung gemäß EP 1 744 090 A1 übertragen, da eine an der Innenseite der Pressfassung radial abragende Wulst soviel Material umfasst, dass beim Verpressen auch mit einer Längenänderung der Pressfassung zu rechnen ist, was die Vorteile der bekannten Schlauchkupplung zunichte macht. Des Weiteren würde die Pressfassung bei starken Presskräften im Dichtbereich vom Hydraulikschlauch abheben.

Bei der erfindungsgemäßen Schlauchkupplung wird im Sicherungsbereich mindestens eine Wandverformung vorgesehen. Diese Wandverformung der Pressfassung umfasst mehr Material als eine Wandverformung im Dichtbereich. Vorzugsweise ist die Wandverformung im Sicherungsbereich größer dimensioniert als die Wandverformungen im Dichtbereich. Die Wandverformung kann wahlweise einen größeren Querschnitt besitzen, d.h. tiefer in das Innere der Pressfassung hineinreichen, eine größere oder Breite Höhe besitzen oder aber es wird eine anderer Querschnitt gewählt, der mehr Material umfasst. Bei einer bevorzugten Ausführungsform wird für die Pressfassung im Sicherungsbereich eine größere Wanddicke als im Dichtbereich gewählt, wobei im gesamten Sicherungsbereich und auch im Dichtbereich jeweils eine gleichmäßig dicke Wandung der Pressfassung vorgesehen ist.

Eine mit einem Sicherungsbereich und einem Dichtbereich ausgestaltete Pressfassung führt beim Verpressen, d.h. der Anwendung eines gleichmäßig auf die Pressfassung wirkenden radialen Druckes dazu, dass der Hochdruckschlauch einerseits sicher, d.h. zugfest und andererseits dicht mit dem Kupplungselement verbunden wird. Der Hochdruckschlauch, der auf den Schlauchnippel aufgeschoben wird, ist im Sicherungsbereich sowohl vom seinem Innen- als auch von seinem Außenmantel befreit, so dass ausschließlich metallische Komponenten an der Verbindung zwischen Pressfassung, Schlauch und Kupplungselement beteiligt sind und eine Ausreißsicherung für den Hochdruckschlauch gewährleisten. Die Metalleinlage wird beim Verpressen durch die Wandverformung der Pressfassung in eine nutförmige Ausbauchung des Schlauchnippels gepresst und eine form- und kraftschlüssige Verbindung erhalten. In dem Dichtbereich ist der Hochdruckschlauch vom Außenmantel befreit, so dass im Befestigungsfall die Wandverformungen der Pressfassung in die Metalleinlage eingreifen können. Der Innenmantel des Hochdruckschlauches sitzt fest auf dem Schlauchnippel, der unterstützend mit Strukturierungen in Form von abragenden Rippen versehen sein kann, die sich in den Innenmantel des Hochdruckschlauchs für einen besseren Sitz eindrücken.

Auch wenn beim radialen Verpressen die Pressfassung gleichmäßig belastet wird, wird in den beiden unterschiedlichen Bereichen der Pressfassung eine unterschiedliche Gegenkraft erzeugt, so ist im Sicherungsbereich mit einem höheren Widerstand zu rechnen, da zum einen mehr Material verformt wird und zum anderen ausschließlich metallische Werkstoffe an der Verbindungsbildung beteiligt sind. Die unterschiedlich dimensionierten Wandverformungen im Sicherungs- und Dichtbereich ermöglicht nun, dass die Pressfassung auf diese unterschiedlichen Widerstände in beiden Bereichen entsprechend ihren Aufgaben reagieren kann. Es wird zum einen eine sichere Verbindung als Ausreißsicherung für den Schlauch im Sicherungsbereich erzielt und andererseits eine dichte Verbindung im Dichtbereich. Die Pressfassung hebt auch bei starken Presskräften nicht vom Hydraulikschlauch ab. Die Pressfassung nimmt die auf sie wirkenden radialen Kräfte gleichmäßig auf, so dass das Verpressen nicht zu einem Schlauchnippeleinfall führt, was die lichte Weite der Hydraulikleitung verringern würde.

Darüber hinaus kann bei einer vorteilhaften Ausgestaltung der Schlauchkupplung durch eine entsprechende Materialauswahl für die Pressfassung und das Kupplungselement der Innendurchmesser des Schlauchnippels vergrößert werden. Bei bekannten Schlauchkupplungen wird sowohl für die Pressfassung als auch für das Kupplungselement eine Stahllegierung, beispielsweise Automatenstahl, eingesetzt. Dieser Werkstoff hat den Vorteil, dass durch Zulegieren von Phosphor, Schwefel oder Blei ein Werkstoff erhalten wird, der sich gut durch spanabhebende Verfahren, wie beispielsweise Drehen, Fräsen oder Bohren bearbeiten lässt. Es können auch andere Werkstoffe eingesetzt werden, wenn diese den Anforderungen an einer Armatur gerecht werden. Diese Anforderungen sind als Lastprofile in den entsprechenden Normen EN 856 bzw. SAEJ 517 100 R 15 zusammengefasst. Wird eine Schlauchkupplung mit einer aus bekannten Material hergestellten Pressfassung verwendet und für das Kupplungselement ein Werkstoff mit höherer Zugfestigkeit und Dehnung ausgewählt, so kann sich beim Verpressen das Material des Schlauchnippels besser verteilen. Bei einem Ausführungsbeispiel wurde eine Pressfassung aus Automatenstahl hergestellt und eine Stahllegierung mit Chrom- und Molybdänzusätzen für das Kupplungselement verwendet. Durch den Zusatz insbesondere von Chrom aber auch von Molybdän besitzt diese Stahllegierung eine erhöhte Festigkeit und Streckgrenze, wodurch auch die Zugfestigkeit wesentlich gesteigert ist. Bei dem Kupplungselement aus einem solchen Material kann der Schlauchnippel eine geringere Wandstärke aufweisen, wodurch bei Verwendung des gleichen Hochdruckschlauchs eine Vergrößerung des lichten Querschnitts, d.h. des Innendurchmessers des Kupplungselementes, erzielbar ist. Die Anforderungen an eine solche Schlauchkupplung für Hochdruckanwendungen mit einem um bis zum 20% vergrößerten lichten Querschnitts wird von der Schlauchkupplung erfüllt. Damit ist bei einer solchen erfindungsgemäßen Schlauchkupplung ein größerer Volumendurchfluss an Hydraulikmedium möglich, was bei der Gesamtvorrichtung zu einer Verbesserung der Energieeffizienz führt.

In der Zeichnung ist der erfindungsgemäße Gegenstand in einem Ausführungsbeispiel dargelegt und zwar zeigt
- Fig. 1: eine erfindungsgemäße Schlauchkupplung vor dem Verpressen und
- Fig. 2: die erfindungsgemäße Schlauchkupplung gemäß Fig. 1 nach dem Verpressen.

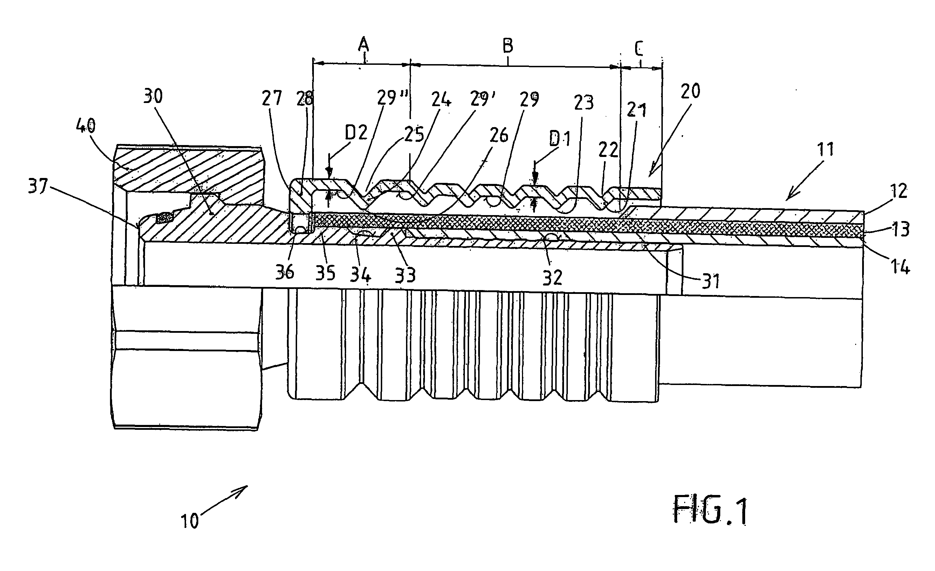

In Fig. 1 ist eine erfindungsgemäße Schlauchkupplung 10 gezeigt. Sie besteht aus dem Kupplungselement 30 und einer Pressfassung 20. An diese Schlauchkupplung 10 ist ein Hochdruckschlauch 11 angeschlossen. Dieser Hochdruckschlauch 11 ist mit einem äußeren Mantel 12, vorzugsweise einem Gummimantel, versehen. Ebenso besteht das Material des inneren Mantels 14 aus einem Gummimaterial. Der äußere Mantel 12 und der innere Mantel 14 bedecken eine Metalleinlage 13, die in diesem Beispiel aus drei Lagen spiralförmig aufgewickelter Drähte besteht. Eine solcher Hochdruckschlauch 11 ist für sehr hohe Drücke und hohe Impulslasten einsetzbar. Wie in Fig. 1 zu sehen, ist der Hochdruckschlauch 11 im vorderen Bereich innen und außen geschält, d.h. besitzt in diesem vorderen Bereich, der als Sicherungsbereich A bezeichnet wird, keinen äußeren Gummimantel 12 und keinen inneren Gummimantel 14. In dem sich anschließenden Dichtbereich B ist der Hochdruckschlauch 11 von seinem äußeren Mantel 12 befreit. Der so vorbereitete Hochdruckschlauch 11 wird zusammen mit einer den Hochdruckschlauch 11 umgreifenden Pressfassung 20 auf den Schlauchnippel 31 des Kupplungselements 30 aufgeschoben.

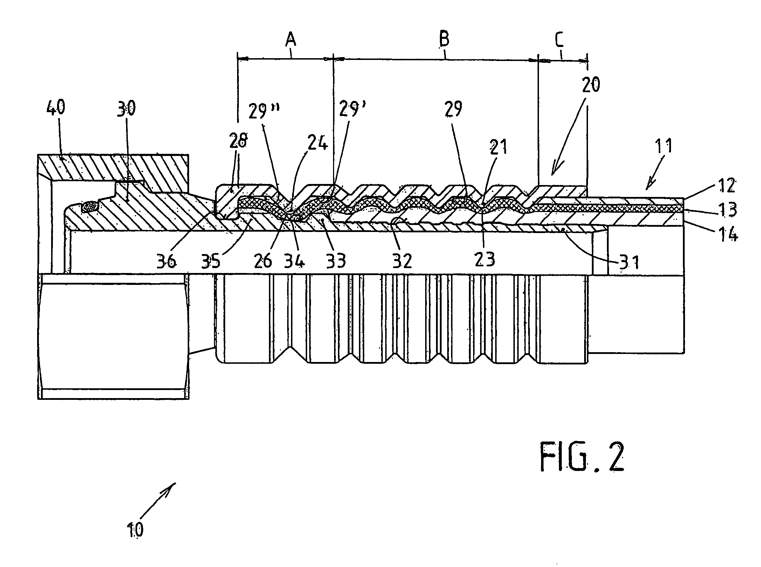

In der Fig. 1 und Fig. 2 ist die Pressfassung 20 im hinteren Bereich verlängert. In diesem Verlängerungsbereich C wird auch der äußere Mantel 12 des Hochdruckschlauches 11 von der Pressfassung 20 eingebunden. Auf diese Weise ist sichergestellt, dass die Metalleinlage 13 vor äußeren Einflüssen geschützt ist.

Das Kupplungselement 30 ist mit einer Überwurfmutter 40 versehen, um das Kupplungselement 30 am vorderen Ende 37 an einer gewünschten Armatur festzulegen. Der Schlauchnippel 31 des Kupplungselementes 30 trägt an seiner äußeren Oberfläche im Dichtbereich B eine Strukturierung in Form von Rippen 32, die sich beim Aufschieben des Hochdruckschlauchs 11 in den inneren Mantel 14 eindrücken. Im Sicherungsbereich A ist am Kupplungselement 30 eine Ausbauchung 34 in Form einer Ringnut eingeformt, die von zwei Schultern 33 und 35 begrenzt wird. Die radial vom Kupplungselement 30 abstehenden Schultern 33 und 35 sind so groß dimensioniert, dass sie die Rippen 32 des Schlauchnippels 31 wesentlich überragen. Auf den Schultern 33, 35 liegt nach der Montage, siehe Fig. 1, der freigeschälte Hochdruckschlauch 11, nämlich die Metalleinlage 13, auf. Der Hochdruckschlauch 11 lässt sich zusammen mit der Pressfassung 20 soweit auf das Kupplungselement 30 aufschieben, bis ein nach innen gerichteter Kragen 28 am vorderen Ende 27 der Pressfassung 20 in eine Umfangsnut 36 des Kupplungselementes 30 positionierend eingreift. Der Hochdruckschlauch 11 lässt sich bis an den Kragen 28 der Pressfassung 20 schieben. In der in Fig. 1 dargestellten Montagelage ist die Pressfassung 20 in ihrer Ursprungsform zu ersehen. Sie besitzt ausgehend vom vorderen Ende 27, welches vom Kragen 28 gebildet ist, im Sicherungsbereich A eine größer dimensionierte Wandverformung 24 und im sich axial anschließenden Dichtbereich B mehrere kleinere Wandverformungen 21. Alle diese Wandverformungen 21, 24 sind Faltungsbereiche der Pressfassung 20 und lassen sich durch Stauchen einer zylindrischen Hülse herstellen. Es ist selbstverständlich auch möglich, spiralförmig angeordnete Wandverformungen vorzusehen, die sich über ein Rollierverfahren erzeugen lassen. Die Wandverformungen 21 und 24 stellen Vorsprünge dar, die radial in Richtung des Hochdruckschlauchs 11 von der Pressfassung 20 abragen. Gegenüberliegend zu den Wandverformungen 21 und 24 sind auf der Außenseite der Pressfassung 20 Vertiefungen 22 bzw. 25 als Kompensationszonen vorgesehen, die beim Verpressen Material aufnehmen können. Die Pressfassung 20 besitzt sowohl im Sicherungsbereich A als auch im Dichtbereich B jeweils eine gleichmäßige Wandstärke D2 bzw. D1. Die Wandstärke D1 der Pressfassung 20 im Dichtbereich B ist jedoch geringer als die Wandstärke der D2 der Pressfassung 20 im Sicherungsbereich A.

Wird nun in einer Spezialpresse gleichmäßig radial ein Druck auf die Pressfassung 20 ausgeübt, wird die Schlauchkupplung 10 in ihren Befestigungsfall überführt, der aus Fig. 2 zu ersehen ist. Der Hochdruckschlauch 11 ist sicher zwischen Pressfassung 20 und Kupplungselement 30 eingebunden. Zum einen wird eine optimale kraft- und formschlüssige Verbindung zwischen dem Kupplungselement 30 und der Pressfassung 20 im Sicherungsbereich A erzielt. Wie gut aus Fig. 2 zu ersehen, wird durch die Wandverformung 24 der Pressfassung 20 beim Verpressen die Metalleinlage 13 in die nutförmige Ausbauchung 34 am Kupplungselement 30 eingedrückt. Die Metalleinlage 13 füllt diese Ausbauchung 34 aus. Gleichzeitig greift die Wandverformung 24 mit ihrer Spitze 26 in die Metalleinlage ein. Durch die Presskraft wird neben der formschlüssigen auch eine kraftschlüssige Verbindung zwischen den Metallkomponenten der Verbindung erzielt. Im Dichtbereich B greifen in gleicher Weise die Wandverformungen 21 in die Metalleinlage 13 ein. Aufgrund der zwischen den Wandverformungen 21 und 24 bestehenden Zwischenräumen 29, 29', 29" kann die Metalleinlage 13 beim Verpressen in diese Zwischenräume 29, 29', 29" ausweichen, was sowohl im Sicherungsbereich A als auch im Dichtbereich B zu einer formschlüssigen Verbindung zwischen Pressfassung 20 und Hochdruckschlauch 11 führt. Bei diesem radialen Verpressen der Pressfassung 20 wird sowohl im Dichtbereich B als auch im Sicherungsbereich A eine Gegenkraft durch die Presskraft erzeugt, die dazu führt, dass die Wandverformungen 21, 24 verformt werden können. Aufgrund der an der Außenseite der Pressfassung 20 gegenüberliegend zu den Wandverformungen 21 und 24 vorgesehenen Vertiefungen 22, 25 kann das verformte Material von diesen Vertiefungen 22, 25 aufgenommen werden, wodurch eine Längenänderung der Pressfassung 20 verhindert wird.

Die in Fig. 1 eingezeichneten unterschiedlichen Wandstärken D1 und D2 der Pressfassung 20 erweisen sich beim Verpressen als vorteilhaft. So erzeugt die Presskraft im Sicherungsbereich A, wo die metallische Pressfassung 20 auf die Metalleinlage 13 auftrifft, die nur kurzzeitig durch Anpassung an die Form der Ausbauchung 34 des Kupplungselement 30 ausweichen kann, dann eine höhere Gegenkraft, als beispielsweise dies durch die Pressfassung 20 im Dichtbereich B hervorgerufen wird. Damit diese höhere Gegenkraft von der Pressfassung 20 im Sicherungsbereich A aufgenommen werden kann, wird vergleichsweise mehr Material in diesem Sicherungsbereich A an der Pressfassung 20 vorgesehen, dies durch eine größere Wanddicke D2 im Sicherungsbereich A im Vergleich zur Wanddicke D1 im Dichtbereich B. Die Erhöhung der Wanddicke D2 im Sicherungsbereich A sollte mindestens 5 bis 20% betragen. Besonders bevorzugt sind Wanddicken D2, die um 8 bis 12% größer sind als die Wanddicke D1. Auf diese Weise wird eine gleichmäßige Einbindung des Hochdruckschlauchs 11 an der Schlauchkupplung 10 erzielt.

Beim Stand der Technik wird der Nippeleinfall nach dem Verpressen gemessen. Ein Nippeleinfall von maximal 10% gilt als Maß für eine sichere technische Verbindung. Ob eine Einschnürung im Bereich des Schlauchnippels 31 beim Verpressen auftritt, kann mittels eines Prüfdornes festgestellt werden. Dieser Prüfdorn besitzt in Axialrichtung nacheinander Bereiche unterschiedlichen Durchmessers. Je nachdem, wie weit sich der Prüfdorn vom vorderen Ende 37 der Schlauchkupplung 30 in das Innere des Schlauchnippels 31 einführen lässt, kann gemessen werden, ob das Verpressen zu einer Einschürung, d.h. zu einer Verringerung des Innendurchmessers geführt hat. Auch eine geringe Einschnürung hat den Nachteil, dass durch die Verringerung des Innendurchmessers der Schlauchnippel 31 nur ein geringerer Volumendurchfluss erfolgen kann, was bei mehreren verwendeten Schlauchkupplungen in einer Hydraulikvorrichtung zu einer wesentlichen Reduzierung des Wirkungsgrades und damit ein Verringerung der Energieeffizienz führt. Bei der erfindungsgemäßen Schlauchkupplung 10 wird eine sichere technische Verbindung für den Hochdruck- und Höchstdruckbereich erzielt und dies ohne dass nach dem Verpressen ein Nippeleinfall festgestellt wird. So betrug der Innendurchmesser des Schlauchnippels 31 vor dem Verpressen 14,8 mm und beträgt nach dem Verpressen unverändert 14,8 mm. Damit vergrößert sich der durch den Schlauchnippel 31 fließende Volumenstrom aufgrund des gleichbleibenden Innendurchmessers. Dieser Innendurchmesser ist demzufolge um bis zu 10% größer als bei Schlauchkupplungen des Standes der Technik mit Nippeleinfall.

Bei dem hier vorliegenden Beispiel besteht die Pressfassung 20 aus Automatenstahl und besitzt zum Korrosionsschutz eine Verzinkung und Konversionsbeschichtung an der Oberfläche. Das Kupplungselement 30 besteht aus einer 42CrMo4-Stahllegierung. Diese weist im Vergleich zu Automatenstahl eine wesentlich höhere Festigkeit und eine höhere Dehnung auf, wodurch sich beim Verpressen das Material des Kupplungselementes 30 insbesondere im Sicherungsbereich A besser und leichter für eine kraftschlüssige Verbindung verteilen lässt. Wie aus Fig. 2 zu ersehen, sind im Sicherungsbereich A am Kupplungselement 30 zwei trapezförmig geformte Schultern 33 und 35 vorgesehen, die die Ausbauchung 34 begrenzen. In die Ausbauchung 34 wird beim Verpressen die Metalleinlage 13 des Hochdruckschlauchs 11 gedrückt, insbesondere indem die radial nach innen abragende Wandverformung 24 mit ihrem Angriffspunkt 26 in die Metalleinlage 13 eingreift. Diese trapezförmigen Schultern 33, 35 verringern ihre Breite mit zunehmender Höhe. Auf diese Weise werden Schrägflächen erzeugt, um die sich die Metalleinlage 13 leicht herumlegen kann, des Weiteren korrespondieren diese Schultern 33, 35 in vorteilhafter Weise mit den Zwischenräumen 29', 29" an der Pressfassung 20. Diese vorteilhafte Ausgestaltung führt zu einem schnellen Formschluss. Eine sichere kraftschlüssige Verbindung wird beim Verpressen erzielt, ohne dass sich die Länge der Pressfassung 20 verändert, indem das Material der Wandverformung 24 in die Vertiefung 25 zurückweichen kann.

Die Wandverformungen 21 und 24 in diesem Ausführungsbeispiel sind im Querschnitt dreieckförmig und besitzen damit spitze Angriffspunkte 23 und 26. Es sind jedoch auch andere Querschnittsformen denkbar. Die Wandverformungen 21 und 25 sind in diesem Beispiel symmetrisch ausgebildet. Es können auch asymmetrische Wandverformungen 21, 24 verwendet werden, vorzugsweise Wandverformungen 21, bei denen die Angriffspunkte 23 in Richtung zum vorderen Ende 27 der Pressfassung 20 versetzt angeordnet sind. Diese Wandverformungen 21 würden sich bei Zugbelastung auf den Hochdruckschlauch 11 ggf. aufrichten und dabei stärker in die Metalleinlage 13 eingreifen, was die Dichtheit unterstützt.

Durch die Verwendung der CrMo-Stahllegierung für das Kupplungselement 30 kann der Schlauchnippel 31 mit einer geringeren Wanddicke hergestellt werden, was zur Vergrößerung des lichten Querschnitts des Kupplungselements 30 führt. Im Vergleich zu einem Kupplungselement 30 aus Automatenstahl für die gleiche Anwendung mit einer lichten Weite vor und nach dem Verpressen von 14,8 mm ist in diesem Ausführungsbeispiel eine lichte Weite von 16,0 mm erzielt worden, was einer Vergrößerung der lichten Weite um ca. 10,8 % entspricht. Damit vergrößert sich der durch einen solchen Schlauchnippel 31 fließende Volumenstrom aufgrund des größeren Innendurchmessers vor dem Verpressen und aufgrund des gleichbleibenden Innendurchmessers nach dem Verpressen. Dieser Innendurchmesser ist demzufolge um 20% oder mehr als 20% größer als bei Schlauchkupplungen des Standes der Technik mit Nippeleinfall. Mit der vorteilhaften Folge, dass ein entsprechend größerer Hydraulikmedienfluss durch diese Schlauchkupplung 10 möglich ist.

Die Erfindung ist nicht auf das gezeigte Ausführungsbeispiel beschränkt, insbesondere nicht auf die verwendeten Materialien oder angegebenen Maße. Es sind auch viele weitere Abwandlungen möglich. Eine größer dimensionierte Wandverformung 24 kann auch auf andere Weise erzielt werden. Die Wandverformungen 21, 24 sind nicht auf den gezeigten Querschnitt begrenzt. Es können mehr als eine Wandverformung 24 vorgesehen werden. Auch die Ausgestaltung des Kupplungselementes 30 im Sicherungsbereich A oder die Strukturierung des Schlauchnippels 31 ist nicht auf die gezeigten Formen und Querschnitte beschränkt.

### Bezugszeichenliste:

- 10: Schlauchkupplung
- 11: Hochdruckschlauch
- 12: Außenmantel
- 13: Metalleinlage
- 14: Innenmantel
- 20: Pressfassung
- 21: Wandverformung
- 22: Vertiefung
- 23: Angriffspunkt
- 24: Wandverformung, Nase
- 25: Vertiefung
- 26: Spitze
- 27: vordere Ende
- 28: Kragen
- 29: Zwischenraum
- 29': Zwischenraum
- 29": Zwischenraum
- 30: Kupplungselement
- 31: Schlauchnippel
- 32: Rippen
- 33: Schulter
- 34: Ausbauchung
- 35: Schulter
- 36: Umfangsnut
- 37: vordere Ende
- 40: Überwurfmutter

- A: Sicherungsbereich
- B: Dichtbereich
- D1: Wanddicke
- D2: Wanddicke

## Patentansprüche

1. Schlauchkupplung (10), insbesondere für Hochdruckhydraulikleitungen oder Höchstdruckhydraulikleitungen,
- mit einem Hochdruckschlauch (11), bei dem zwischen zwei Kunststoffmänteln (12, 14) eine Metalleinlage (13) aus einem Drahtgeflecht oder aus mindestens einer Drahtspiralenwicklung angeordnet ist,
- mit einem rohrartigen Kupplungselement (30), das am vorderen Ende (37) an eine Armatur anschließbar ist und dass am anderen Ende einen Schlauchnippel (31) zur Aufnahme des Hochdruckschlauchs (11) aufweist,
- mit einer unter radialen Druck verformbaren Pressfassung (20),
- wobei der Anschlussbereich für den Hochdruckschlauch (11) in der Schlauchkupplung (10) zwei Bereiche umfasst, nämlich einen vorderen Sicherungsbereich (A), und einen sich in Axialrichtung anschließenden Dichtbereich (B), wobei im Sicherungsbereich (A) die von den Kunststoffmänteln (12, 14) befreite Metalleinlage (13) und wobei im Dichtbereich (B) der vom äußeren Kunststoffmantel (12) befreite Hochdruckschlauch (11) zwischen Schlauchnippel (31) und Pressfassung (20) verpresst ist,
- wobei die Pressfassung (20) im Dichtbereich (B) radial zum Hochdruckschlauch (11) verlaufende und zum Hochdruckschlauch (11) gerichtete als Vorsprünge ausgebildete Wandverformungen (21) besitzt sowie an der Außenseite der Pressfassung (20) im Bereich dieser Wandverformungen (21) Vertiefungen (22) vorgesehen sind und wobei die Pressfassung (20) im Sicherungsbereich (A) mindestens eine radial zum Hochdruckschlauch (11) verlaufende und zum Hochdruckschlauch (11) gerichtete Wandverformung (24) besitzt sowie an der Außenseite der Pressfassung (20) im Bereich der Wandverformung (24) eine Vertiefungen (25) vorgesehen ist,
- wobei eine im Sicherungsbereich (A) vorgesehene Wandverformung (24) mehr Material umfasst als eine Wandverformung (21) im Dichtbereich (B),
- wobei der Schlauchnippel (31) im Sicherungsbereich (A) gegenüberliegend zu der Wandverformung (24) eine Ausbauchung (34) aufweist,
**dadurch gekennzeichnet, daß** die Pressfassung (20) im Sicherungsbereich (A) eine
gleichmäßige Wanddicke D2 und im Dichtbereich (B) eine gleichmäßige Wanddicke D1 aufweist.

2. Schlauchkupplung nach Anspruch 1, **dadurch gekennzeichnet, dass** die einstückige Pressfassung (20) im Sicherungsbereich (A) eine gleichmäßige Wanddicke D2 aufweist, die größer als die Wanddicke D1 ist, vorzugsweise um 5 bis 20% größer als die Wanddicke D1 ist, besonders bevorzugt um 8 bis 12% größer als die Wanddicke D1 ist.

3. Schlauchkupplung nach Anspruch 1 oder 2, **dadurch gekennzeichnet, dass** die Pressfassung (20) am vorderen Ende (27) einen radial nach innen gerichteten Kragen (28) besitzt, der in eine Umfangsnut (36) des Kupplungselementes (30) eingreift.

4. Schlauchkupplung nach einem der Ansprüche 1 bis 3, **dadurch gekennzeichnet, dass** die Pressfassung (20) mit ihrem hinteren Ende über den Dichtbereich (B) hinaus verlängert ist und mit diesem Verlängerungsbereich (C) den gesamten Hydraulikschlauch (11) mit seinen zwei Kunststoffmänteln (12, 14) und der Metalleinlage (13) umfasst.

5. Schlauchkupplung nach einem der Ansprüche 1 bis 4, **dadurch gekennzeichnet, dass** eine Strukturierung des Schlauchnippels (31) vorgesehen ist, vorzugsweise in Form von radial abstehenden Rippen (32).

6. Schlauchkupplung nach einem der Ansprüche 1 bis 5, **dadurch gekennzeichnet, dass** der Schlauchnippel (31) benachbart zur Ausbauchung (34) jeweils eine Schulter (33, 35) besitzt, wobei diese Schultern (33, 35) die Strukturierung des Schlauchnippels (31) überragen.

7. Schlauchkupplung nach einem der Ansprüche 1 bis 6, **dadurch gekennzeichnet, dass** die Pressfassung (20) und das Kupplungselement (30) aus unterschiedlichen Werkstoffen gefertigt sind, vorzugsweise aus unterschiedlichen Stahlwerkstoffen.

8. Schlauchkupplung nach Anspruch 7, **dadurch gekennzeichnet, dass** der Werkstoff des Kupplungselements (30) der Pressfassung (20) im Vergleich zum Werkstoff der Pressfassung (20) eine höherer Zugfestigkeit aufweist.

9. Schlauchkupplung nach Anspruch 7 oder 8, **dadurch gekennzeichnet, dass** für das Kupplungselements (30) eine Chrom-Molybdän-Stahllegierung und für die Pressfassung (20) ein Automatenstahl eingesetzt wird.

10. Schlauchkupplung nach einem der Ansprüche 1 bis 9, **dadurch gekennzeichnet, dass** im Montagefall die Pressfassung (20) den Schlauchnippel (31) mit dem aufgeschobenen Hydraulikschlauch (11) umgreift und im Befestigungsfall die Pressfassung (20) mit den Wandverformungen (21) an den Hydraulikschlauch (11) angreift, wobei die Schlauchkupplung (10) durch Anwendung eines äußeren radialen Druckes auf die Pressfassung (20) von dem Montagefall in den Befestigungsfall überführbar ist.

11. Schlauchkupplung nach einem der Ansprüche 7 bis 10, **dadurch gekennzeichnet, dass** die lichte Weite des gesamten Schlauchnippels (31) im Befestigungsfall, also nach dem radialen Verpressen, unverändert ist.

12. Schlauchkupplung nach einem der Ansprüche 1 bis 11, **dadurch gekennzeichnet, dass** die Wandverformungen (21, 24) und die zugehörigen Vertiefungen (22, 25) Faltungsbereiche der Pressfassung (20) darstellen.

13. Schlauchkupplung nach Anspruch 12, **dadurch gekennzeichnet, dass** die Wandverformungen (21, 24) und die zugehörigen Vertiefungen (22, 25) durch Stauchen gebildet sind.

14. Schlauchkupplung nach einem der Ansprüche 1 bis 13, **dadurch gekennzeichnet, dass** die Wandverformungen (21, 24) im Querschnitt asymmetrisch geformt sind, nämlich einen in Richtung zum vorderen Ende (27) der Pressfassung (20) versetzten Angriffspunkt (23, 26) aufweisen.

15. Schlauchkupplung nach einem der Ansprüche 1 bis 14, **dadurch gekennzeichnet, dass** eine im Sicherungsbereich (A) vorgesehene Wandverformung (24) größer dimensioniert ist als eine Wandverformung (21) im Dichtbereich (B).

## Claims

1. Hose coupling (10), in particular for high-pressure hydraulic lines or extreme pressure hydraulic lines,
- with a high-pressure hose (11) for which arranged between two plastic claddings (12, 14) is a metal insert (13) made of a wire mesh or of at least a wire spiral coil,
- with a tube-like coupling element (30) which is attachable at the front end (37) to a faucet and which exhibits on the other end a hose nipple (31) for accommodating the high-pressure hose (11),
- with a press mounting (20) which is malleable when under radial pressure,
- whereby the connection area for the high-pressure hose (11) in the hose coupling (10) comprises two sections, namely, a front securing section (A) and a sealing section (B), whereby in the securing section (A) the metal insert (13) free of the plastic claddings (12, 14), and likewise in sealing section (B) the high-pressure hose (11) free of the outer plastic cladding (12), is pressed between hose nipple (31) and press mounting (20),
- whereby the press mounting (20) in sealing section (B) has wall deformations (21) which run radially to the high-pressure hose (11) and are facing the high-pressure hose (11) shaped as protuberances; provided as well on the outside of the press amounting (20) in the area of these wall deformations (21) are recesses (22), whereby the press mounting (20) in the securing section (A) has at least one wall deformation (24) running radially to the high-pressure hose (11) and facing the high-pressure hose (11); provided as well on the outside of the press mounting (20) in the area of the wall deformation (24) is a recesses (25),
- whereby a wall deformation (24) provided in the securing section (A) comprises more material than a wall deformation (21) in the sealing section (B),
- whereby the hose nipple (31) in the securing section (A) lying opposite the wall deformation (24) exhibits a bulge (34),
- thereby **characterized in that** the press mounting (20) in the securing section (A) exhibits an even wall thickness D2 and in the sealing section (B) an even wall thickness D1.

2. Hose coupling pursuant to Claim 1, thereby **characterized in that** the single-piece press mounting (20) in the securing section (A) exhibits an even wall thickness D2 which is greater than wall thickness D1, preferably 5 to 20% greater than wall thickness D1, more preferably 8 to 12% greater than wall thickness D1.

3. Hose coupling pursuant to Claim 1 or 2, thereby **characterized in that** the press mounting (20) at the front end (27) has a collar (28) radially facing inwards which grips into a peripheral groove (36) of the coupling element (30).

4. Hose coupling pursuant to one of the claims 1 to 3, thereby **characterized in that** the press mounting (20) with its rear end is extended beyond the sealing section (B) and with this extended section (C) surrounds the entire hydraulic hose (11) with its two plastic claddings (12, 14) and the metal insert (13).

5. Hose coupling pursuant to one of the claims 1 to 4, thereby **characterized in that** a structuring of the hose nipple (31) is intended, preferably in the form of radially protruding ribs (32).

6. Hose coupling pursuant to one of the claims 1 to 5, thereby **characterized in that** the hose nipple (31) has shoulders (33, 35), each adjacent to the bulge (34), whereby these shoulders (33, 35) surmount the structuring of the hose nipple (31).

7. Hose coupling pursuant to one of the claims 1 to 6, thereby **characterized in that** the press mounting (20) and the coupling element (30) are manufactured of different materials, preferably of different steel materials.

8. Hose coupling pursuant to Claim 7, thereby **characterized in that** the material of the coupling element (30) of the press mounting (20) exhibits greater tensile strength compared with the material of the press mounting (20).

9. Hose coupling pursuant to Claim 7 or 8, thereby **characterized in that** employed for the coupling element (30) is a chrome-molybdenum alloy steel and for the press mounting (20) a machining steel.

10. Hose coupling pursuant to one of the claims 1 to 9, thereby **characterized in that** during assembly the press mounting (20) grips around the hose nipple (31) with the slid-on hydraulic hose (11) and, when fastening, the press mounting (20) with the wall deformations (21) engages on the hydraulic hose (11), whereby the hose coupling (10), through application of external radial pressure on the press mounting (20), is transferable from the assembly state to the fastening state.

11. Hose coupling pursuant to one of the claims 7 to 10, thereby **characterized in that** when being fastened, i.e., subsequent to application of radial pressure, the inner width of the entire hose nipple (31) remains unchanged.

12. Hose coupling pursuant to one of the claims 1 to 11, thereby **characterized in that** the wall deformations (21, 24) and the concomitant recesses (22, 25) represent folding areas of the press mounting (20).

13. Hose coupling pursuant to Claim 12, thereby **characterized in that** the wall deformations (21, 24) and the concomitant recesses (22, 25) are formed by bulging.

14. Hose coupling pursuant to one of the claims 1 to 13, thereby **characterized in that** the wall deformations (21, 24) in cross-section are asymmetrical in form, namely, they exhibit an engagement point (23, 26) which is offset in the direction to the front end (27) of the press mounting (20).

15. Hose coupling pursuant to one of the claims 1 to 14, thereby **characterized in that** a wall deformation (24) intended in the securing section (A) is greater in dimension than a wall deformation (21) in the sealing section (B).

## Revendications

1. Couplage de flexible (10), en particulier pour conduites hydrauliques sous haute pression ou conduites hydrauliques sous très haute pression,
- comprenant un flexible haute pression (11) sur lequel une garniture métallique (13), composée d'un treillis filaire ou au moins d'un fil enroulé en spirale, est agencée entre deux gaines en plastique (12, 14),
- comprenant un élément de couplage (30) de type tubulaire raccordable par l'extrémité avant (37) à une robinetterie et qui présente à l'autre extrémité un nipple (31) servant à recevoir le flexible haute pression (11),
- comprenant une douille sertie (20) déformable sous l'action d'une pression radiale,
- sachant que la zone de raccordement du flexible haute pression (11) comprend deux zones dans le couplage (10) de flexible, à savoir une zone avant de sécurisation (A) et une zone d'étanchéisation (B) la suivant dans le sens axial, sachant que dans la zone de sécurisation (A) la garniture métallique (13) débarrassée des gaines plastiques (12, 14), et dans la zone d'étanchéisation (B) le flexible haute pression (11) débarrassé de la gaine plastique extérieure (12) sont comprimés entre le nipple (31) pour flexible et la douille sertie (20),
- sachant que la douille sertie (20) possède dans la zone d'étanchéisation (B), radialement par rapport au flexible haute pression (11), des déformations pariétales (21) configurées en saillies et orientées vers le flexible haute pression (11), et que sur le côté extérieur de la douille sertie (20) des creux (22) ont été prévus dans la zone de ces déformations pariétales (21), et que la douille sertie (20) possède dans la zone de sécurisation (A) au moins une déformation pariétale (24) ayant un tracé radial par rapport au flexible haute pression (11) et orientée vers le flexible haute pression (11), et que sur le côté extérieur de la douille sertie (20) est prévu un creux (25) dans la zone des déformations pariétales (24),
- sachant qu'une déformation pariétale (24) prévue dans la zone de sécurisation (A) comprend plus de matière qu'une déformation pariétale (21) située dans la zone d'étanchéisation (B),
- sachant que le nipple (31) pour flexible présente dans la zone de sécurisation (A) un creux (34) situé en face de la déformation pariétale (24),
**caractérisé en ce que**
la douille sertie (20) présente une épaisseur de paroi D2 uniforme dans la zone de sécurisation (A) et une épaisseur de paroi D1 uniforme dans la zone d'étanchéisation (B).

2. Couplage de flexible selon la revendication 1, **caractérisé en ce que** la douille sertie (20) monobloc présente une épaisseur de paroi D2 uniforme dans la zone de sécurisation (A), épaisseur qui est supérieure à l'épaisseur de paroi D1, de préférence 5 à 20 % supérieure à l'épaisseur de paroi D1, et particulièrement de préférence 8 à 12 % supérieure à l'épaisseur de paroi D1.

3. Couplage de flexible selon la revendication 1 ou 2, **caractérisé en ce que** la douille sertie (20) possède à l'extrémité avant (27) un col (28) dirigé radialement vers l'intérieur, col qui engrène dans une gorge périphérique (36) de l'élément de couplage (30).

4. Flexible selon l'une des revendications 1 à 3, **caractérisé en ce que** la partie arrière de la douille sertie (20) est prolongée d'un quantum dépassant la zone
d'étanchéisation (B), et que cette zone de prolongation (C) comprend l'ensemble du flexible hydraulique (11) avec ses deux gaines plastiques (12, 14) et la garniture métallique (13).

5. Couplage de flexible selon l'une des revendications 1 à 4, **caractérisé en ce qu'**une structuration du nipple (31) pour flexible est prévue, de préférence sous forme de nervures (32) en saillie radiale.

6. Couplage de flexible selon l'une des revendications 1 à 5, **caractérisé en ce que** le nipple (31) pour flexible possède, au voisinage du creux (34), des épaulements respectifs (33, 35), sachant que ces épaulements (33, 35) dépassent la structure conférée au nipple (31) pour flexible.

7. Couplage de flexible selon l'une des revendications 1 à 6, **caractérisé en ce que** la douille sertie (20) et l'élément de couplage (30) ont été fabriqués en matériaux différents, de préférence en différents matériaux à base d'acier.

8. Flexible selon la revendication 7, **caractérisé en ce que** le matériau de l'élément de couplage (30) de la douille sertie (20) présente, comparé au matériau de la douille sertie (20), une résistance en traction plus élevée.

9. Flexible selon la revendication 7 ou 8, **caractérisé en ce que** l'élément de couplage (30) est en alliage acier-chrome-molybdène et la douille sertie (20) en acier de décolletage.

10. Couplage de flexible selon l'une des revendications 1 à 9, **caractérisé en ce que** lors du montage la douille sertie (20) ceinture le nipple (31) sur lequel a été emmanché le flexible hydraulique (11), et que lors de la fixation la douille sertie (20) attaque par ses déformations pariétales (21) le flexible hydraulique (11), sachant que le couplage
de flexible (10) peut être transféré, par application d'une pression radiale externe sur la douille sertie (20), de la situation de montage à la situation de fixation.

11. Couplage de flexible selon l'une des revendications 7 à 10, **caractérisé en ce que** l'ouverture libre de l'ensemble du nipple (31) pour flexible reste inchangée en situation de fixation, donc après le sertissage radial.

12. Couplage de flexible selon l'une des revendications 1 à 11, **caractérisé en ce que** les déformations pariétales (21, 24) et les creux afférents (22, 25) représentent les zones plissées de la douille sertie (20).

13. Couplage de flexible selon la revendication 12, **caractérisé en ce que** les déformations pariétales (21, 24) et les creux afférents (22, 25) sont formés par refoulement.

14. Couplage de flexible selon l'une des revendications 1 à 13, **caractérisé en ce que** les déformations pariétales (21, 24) présentent vues en coupe une forme asymétrique, à savoir un point d'attaque (23, 26) décalé en direction de l'extrémité avant (27) de la douille sertie (20).

15. Couplage de flexible selon l'une des revendications 1 à 14, **caractérisé en ce qu'**une déformation pariétale (24) prévue dans la zone de sécurisation (A) est dimensionnée plus grande qu'une déformation pariétale (21) dans la zone d'étanchéisation (B).
